# EUROPEAN PATENT APPLICATION

(11) **EP 1 197 890 A1**
(43) Date of publication of application: **17.04.2002**
(21) Application number: 01104368.4
(22) Date of filing: 23.02.2001
(51) Int. Cl.: G06F 17/60

(54) **Method and system for financially intermediating transaction of products**

(30) Priority: 13.10.2000 JP 2000318238
(71) Applicant: Hitachi, Ltd., Chiyoda-ku, Tokyo 101-8010 (JP); Hitachi Systems and Services, Ltd., Ota-ku, Tokyo (JP)
(72) Inventor: Kawakami, Yuji, Chiyoda-ku, Tokyo 100-8220 (JP); Nomura, Koji, Chiyoda-ku, Tokyo 100-8220 (JP); Kawamura, Etsuo, Ota-ku, Tokyo 143-8545 (JP); Shoda, Shigeru, Chiyoda-ku, Tokyo 100-8220 (JP)
(74) Representative: Strehl Schübel-Hopf & Partner

(57) **Abstract**

An intermediating apparatus connected to a storage management system for financially intermediating the transaction of products includes: a transaction managing unit for managing the transaction by relating a seller, a buyer, and the products carried into the storage by the seller and assumed to be purchased by the buyer to correspond to each other; a settling unit for paying to the seller a buying price of the products calculated on the basis of warehousing information transmitted from the storage management system at the time of delivery of the products from the seller to the storage; and an invoicing unit for notifying a claim to the buyer concerning a selling price of the products calculated on the basis of delivery information transmitted from the storage management system at the time of delivery of the products from the storage, thereby providing a system for encashing the inventory which is determined to be sold.

## Description

### BACKGROUND OF THE INVENTION

The present invention relates to a method for financially intermediating transaction of products, and more particularly to an apparatus and a system for financially intermediating transaction of products which contribute to the improvement of the efficiency of fund operations of a seller of products by reducing the burden of cost concerning the inventory holding by the seller, as well as a program for executing the same.

Buyers are making attempts to reduce their inventories to curtail the cost concerning inventory holdings by the introduction of the just-in-time scheme (JIT; a production system the keeping in stock of materials, parts, and products manufactured or delivered in each manufacturing stage on the basis of estimation is ceased, and only required quantities are delivered immediately before so as to minimize the inventory cost and heighten the awareness of quality control). According to this scheme, sellers are required to hold fixed quantities of inventory for supplying products to buyers on a stable basis, so that the sellers bear expenses for the time lag from the manufacture of products until the encashment of products. Namely, according to JIT, the seller who delivers products to the buyer is made to hold inventories, and the inventory cost which is conventionally borne by the buyer is merely passed on to the seller. This results in the impairment of the liquidity of the seller, and the seller has been compelled to procure funds required as a consequence of the holding of inventories (hereafter simply referred to as inventory funds) by borrowing from financial institutions.

However, in a case where the seller is a medium or small business, and the fund is procured by borrowing from a financial institution, not only must the seller bear high-rate interest on borrowing, and much time is required for examination and the like in the case of an unsecured loan. For example, in a bank loan process which is centered on loans secured on present land, borrowing itself is difficult in many cases. In addition, it is possible to cite a drawback that the account in the balance sheet swells in the case of borrowing. Further, although financing is possible through the discounting of a promissory note in which a promissory note received from the buyer is discounted by a financial institution or the like, in this case the seller receives the promissory note only after the buyer actually placed an order with the seller, i.e., after the selling of the inventory, the seller is unable to use this method before the selling of the inventory. The discounting of a promissory note is a method for filling up the time lag from the sale of products until the collection of a bill, and is not for filling up the time lag from the manufacture of products until the sale. For this reason, in the transaction between the seller and the buyer, particularly in the case where the seller is a medium or small business, a trader having financial strength is required, and the transactions failed to materialize without such an entity. However, commissions which are paied to such intermediators are very high, and constitute a factor pushing up the cost of the sellers.

Electronic commerce has been put to practical use due to the development of information and technology, and a method of transaction which does not require intermediators such as traders has thus come to be realized. However, the aforementioned sellers are bound to make use of these intermediators, and under the present situation the sellers have not benefitted from the reduction of cost by the introduction of an electronic transaction system.

As described above, a seller in the "JIT environment" (a seller who supplies products on a continuous basis to a buyer who adopts the JIT scheme) is compelled to have its funds fixed due to its own holding of inventories which are not held by a buyer. At present, an effective countermeasure for making up for liquidity with respect to this problem does not exist. Consequently, the seller pays to a trader commissions which are essentially not necessary, which has been one factor exerting pressure on the management of the seller.

### SUMMARY OF THE INVENTION

Accordingly, it is an object of the present invention to provide a method and an apparatus for financially mediating transaction of products which make it possible to reduce the cost borne by the seller by providing a system for encashing an inventory for which sale is virtually anticipated such as the JIT inventory, thereby improving the efficiency of fund operations of the seller.

Another object of the present invention is to provide a method and a system for inventory financing using a computer which makes possible the outsourcing of finance in the stages of physical distribution and inventory of products between the buyer and the seller.

To this end, in accordance with one aspect of the present invention, an intermediator intermediates between the seller and the buyer, purchases the products from the seller, and delivers a promissory note or an electronic promissory note to the seller. The seller encashes the note receivable by having it discounted by a bank or the like. The promissory note may be allocated to the payment to another company, or may be held until its maturity date. The intermediator is a company invested by a leading bank, a big business, or the like, the promissory note or the electronic promissory note issued by it is credit-worthy, can be discounted at a low cost, and may be reserved for payment to another company. As for the promissory note, the electronic promissory note which can be used in the world is desirable. Further, the intermediator may issue securities by offering as collateral the inventory purchased from the seller, and may finance by collecting funds from investors. In this case, the promissory note or the electronic promissory note are not issued, and the funds collected from the inventors are allocated to the payment to the seller.

In addition, in accordance with another aspect of the invention, since the intermediator has no risk other than in financing, the intermediator is able to set the commission at a minimum level. The risks include, among others, (1) a case where the inventory cannot be purchased due to a bancrupty or the like of the buyer, and (2) a case where the buyer is unable to effect payment for the purchased products. However, all of these risks are hedged by combining an inventory buy-back contract with the seller, a reservation of propriety right contact with the seller, an accounts receivable sale contact with the seller, a contract of credit insurance with a nonlife insurance company, and the like.

Other objects, features and advantages of the present invention will become more apparent from the description of the following embodiments of the invention taken in conjunction with the accompanying drawings.

### BRIEF DESCRIPTION OF THE DRAWINGS

Fig. 1 is a schematic diagram of an inventory financing system;
Fig. 2 is a functional block diagram of an intermediator system;
Fig. 3 is a functional block diagram of a warehouse system;
Fig. 4 is a functional block diagram of a seller system;
Fig. 5 is a functional block diagram of a buyer system;
Fig. 6 is a flowchart of warehousing processing by the intermediator system;
Fig. 7 is a flowchart of warehousing processing by the warehouse system;
Fig. 8 is a flowchart of delivery processing by the intermediator system;
Fig. 9 is a flowchart of delivery processing by the warehouse system;
Fig. 10 is a flowchart of warehousing and receipts processing by the seller system;
Fig. 11 is a flowchart illustrating the flow of risk management (1) by the intermediator;
Fig. 12 is a flowchart illustrating the flow of risk management (2) by the intermediator;
Fig. 13 is a flowchart illustrating the flow of risk management (3) by the intermediator;
Fig. 14 is a flowchart of risk management by the intermediator;
Fig. 15 is a diagram illustrating the configuration of a database of the seller system;
Fig. 16 is a diagram illustrating the configuration of a database of the warehouse system; and
Fig. 17 is a diagram illustrating the configuration of a database of the intermediator system.

### DETAILED DESCRIPTION OF THE EMBODIMENT

Referring now to the accompanying drawings, a description will be given of an embodiment of the invention.

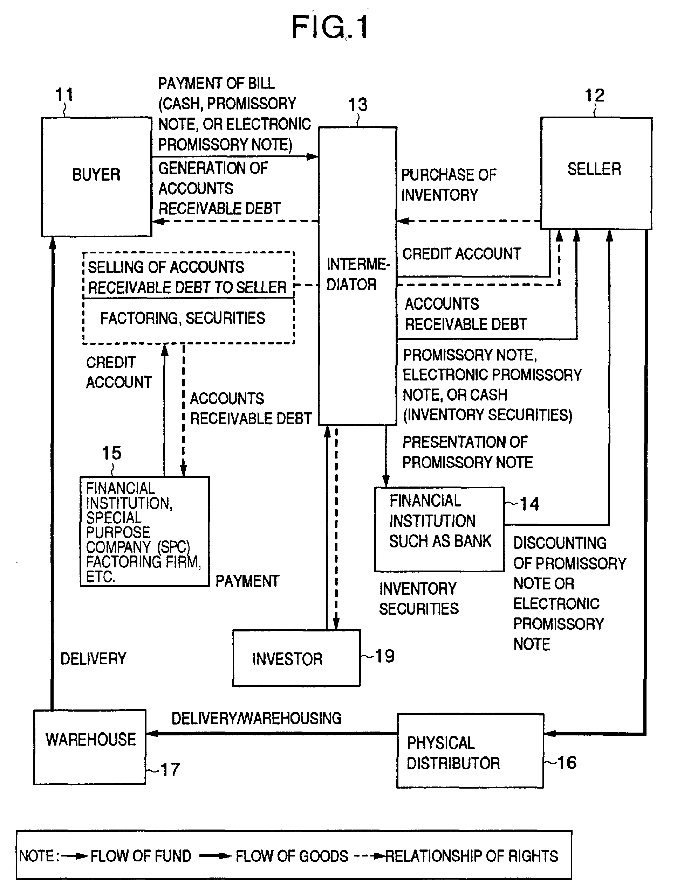

Fig. 1 is an overall schematic diagram explaining a basic concept of a transaction scheme in accordance with the invention. As shown in Fig. 1, the transaction scheme of the invention is basically configured by a buyer 11 who receives the supply of products on a continuous basis; a plurality of sellers 12 for supplying products to the buyer 11; an intermediator 13 located between the two parties; a warehouse 17 for storing the products manufactured by the sellers 12; and a physical distributor 16 for delivering the products from the seller 12 to the warehouse 17 or from the warehouse 17 to the buyer 11. Here, it is assumed that a contract to the effect that the seller 12 will supply predetermined products to the buyer 11 on a continuous basis in accordance with an order placed by the buyer, or an agreement similar to the contract, is present between each seller 12 and the buyer 11. It should be noted that although a description will be given on the assumption that a storage for storing the products is a warehouse, the storage in reality is not limited to the warehouse, and any facility will suffice if it is capable of storing the products sold by the seller 12 to the intermediator 13.

In addition, the intermediator 13 in the invention is so configured that it will not bear risks such as the inability to sell the products purchased from the seller 12 due to the bankruptcy or the like of the buyer and the turning of a claim against the buyer 11 into a bad debt. Specifically, the intermediator 13 concludes with the seller 12 a product buy-back contract and an account debt transfer contract which are issued on the condition of the occurrence of a predetermined trigger-event, such as the bancruptcy of the buyer 11, the dishonor of a promissory note, and the like. In the event that the seller 12 refuses to make such contracts, it is conceivable to cope with the situation by such as effecting an insurance policy. Consequently, the intermediator 13 does not bear the credit risk of the buyer 11 and functions as an entity who only supplies liquidity to the seller 12.

It should be noted that the seller 12 may be a single corporation. Further, the warehouse 17 and the physical distributor 16 may be operated by the same entity as the seller 12 or the intermediator 13.

Under the transaction scheme of the invention, by using the above-described background as a precondition, all the products which are conventionally held as an inventory by the seller 12 are first sold to the intermediator 13. Specifically, if the seller 12 manufactures the products, the physical distributor 16 delivers them to the warehouse 17, and the intermediator 13 pays the value of the products to the seller 12 on the basis of warehousing information from the warehouse 17. At this time, the payment is made by a method which is not particularly limited to cash, a promissory note, remittance, fund transfer, or the like. At this time, the account receivable of the seller 12 is drawn down, and if the payment is made by a promissory note, a note receivable is added up, and if it is made by cash, cash is added up. At any rate, the seller 12 who received the payment is able to improve the efficiency of fund operations by procuring the fund by one of the methods which are described below.

On the other hand, the buyer 11 who purchases the products instructs the physical distributor 16 to deliver the products, and the physical distributor 16, upon receipt of the instruction of delivery, delivers the products from the warehouse 17 to the buyer 11. At this time, the delivery of the products by the physical distributor 16 is notified from the warehouse 17 to the intermediator 13, and the intermediator 13, in turn, requests payment of the value of the products to the buyer 11. The buyer 11 inspects the products delivered by the physical distributor 16, and pays the value to the intermediator 12. Alternatively, the buyer 11 may place an order for the products with the intermediator 13, and the intermediator 13 upon receiving the order may instruct the delivery of the products to the physical distributor 16. In addition, the payment of the value may be made by a promissory note, cash, or any other method in the same way as the above-described payment of the value from the intermediator 13 to the seller 12. Described above is an outline of the transaction scheme in accordance with the invention.

In the invention, although, as described above, as the intermediator 13 buys up the inventory products of the seller 12, the seller 12 is able to encash the products at an early stage without fixing the fund by effecting financing in which the value of the products received from the intermediator 13 is used as a base.

For example, in a case where the intermediator 13 drew a promissory note for payment of the value, the seller 12 is able to procure the fund by having this promissory note discounted by a financial institution or the like. The intermediator 13 is immune from the risks concerning the buyer as described above, and the substance of its business activities consists of only the resale of products having an extremely high probability of sale, its risks involved are very low. Promissory notes drawn by the intermediator 13 can be discounted at favorable rates, and the seller 12 is able to reduce the cost substantially as compared with cases where the seller 12 receives bank loans on its own credit.

In addition, in a case where the intermediator 13 pays the value of the products in cash, the intermediator 13 structures in advance a scheme for raising funds from investors by using as a base the cash flow created by the products (in this case, the value paid as a result of the sale of the products to the buyer 11). Upon receipt of the warehousing of the products, the intermediator 13 procures cash for payment to the seller 12 by means of the liquidity of the products.

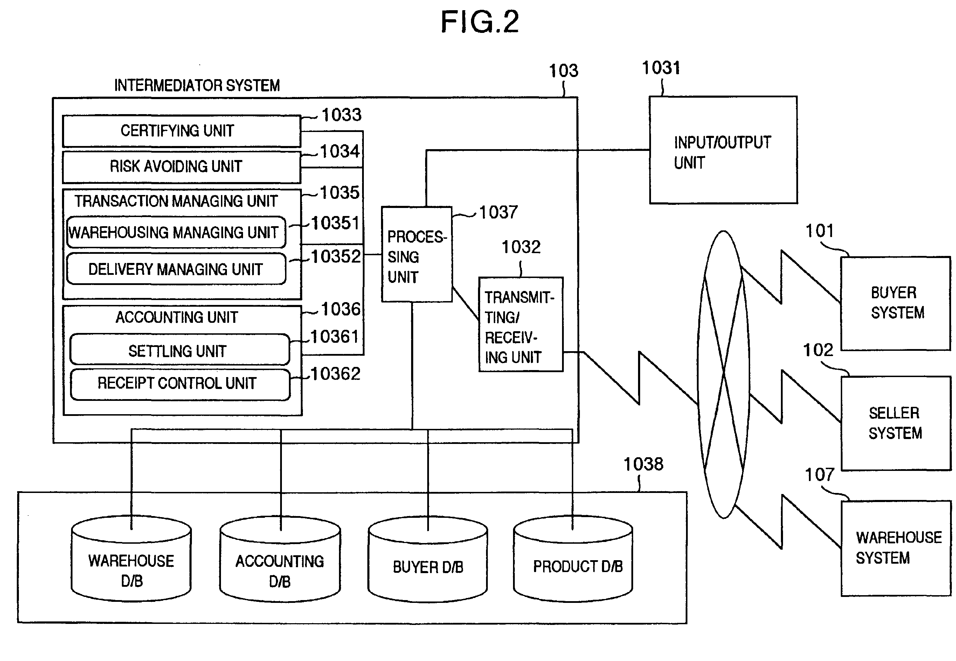

Fig. 2 shows a block diagram of the configuration of a system 103 of the intermediator 13 (hereafter, simply referred to as the intermediator system). The intermediator system 103 is comprised of an input/output unit 1031 for accepting inputs and outputs to and from its system manager or the like; a transmitting/receiving unit 1032 for effecting transmission and reception of information with respect to a system 101 of the buyer 11 (hereafter, simply referred to as the buyer system), a system 102 of the seller 12 (hereafter, simply referred to as the seller system), and a system 107 of the warehouse 17 (hereafter, simply referred to as the warehouse system), which are respectively connected to the intermediator system through, for instance, a communication network; a certifying unit 1033 for certifying each of the aforementioned systems; a risk avoiding unit 1034 for putting into effect the aforementioned risk avoiding measure at the time of the bankruptcy or the like of the buyer; a transaction managing unit 1035 for processing information concerning the products subject to transaction; an accounting unit 1036 for carrying out receipt-and-disbursement and payment and invoicing operations; and a processing unit 1037 having a computer. The transaction managing unit 1035 has a warehousing managing unit 10351 for managing information on the warehousing of the products and a delivery managing unit 10352 for managing information on their delivery, while the accounting unit 1036 has a settling unit 10361 for managing payment operations and information concerning disbursements and an invoicing and receipt control unit 10362 for managing information concerning the invoicing operations and receipt. Further, this intermediator system 103 has an intermediator database (DB) 1038 including databases for respectively managing information concerning the products stored in the warehouse, information concerning receipt and payment, information concerning the buyer who conducts transactions with this intermediator system 103, and information concerning the products subject to transaction.

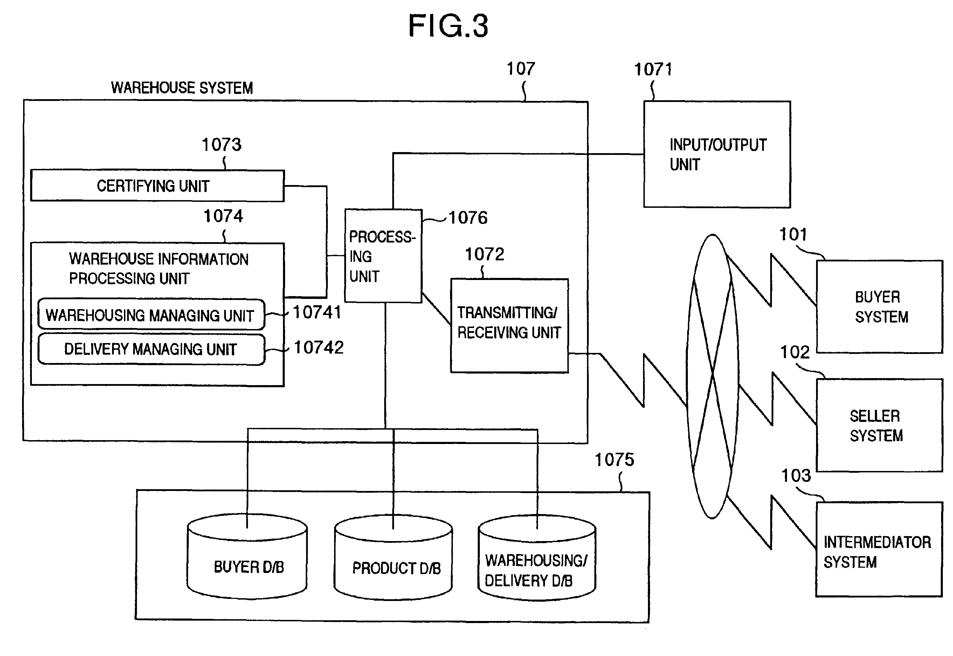

Fig. 3 shows a block diagram of the configuration of the warehouse system 107. The warehouse system 107 is comprised of an input/output unit 1071 for accepting inputs and outputs to and from its system manager or the like; a transmitting/receiving unit 1072 for effecting through, for example, the communication network transmission and reception of information with respect to the system 101 of the buyer 11 (hereafter, simply referred to as the buyer system), the system 102 of the seller 12 (hereafter, simply referred to as the seller system), and the intermediator system 103; a certifying unit 1073 for providing certification for the respective systems (101 to 103); a warehouse information processing unit 1074 for managing information on the movement of the products into and out of the warehouse; and a system processing unit 1076. The warehouse information processing unit 1074 has a warehousing managing unit 10741 for managing information on the warehousing of the products and a delivery managing unit 10742 for managing information on their delivery. Further, this warehouse system 107 has a warehouse database 1075 including databases for respectively managing information concerning the products stored in the warehouse 107, information concerning the products which are warehoused and delivered, and information concerning the buyer who conducts transactions with this warehouse system 107.

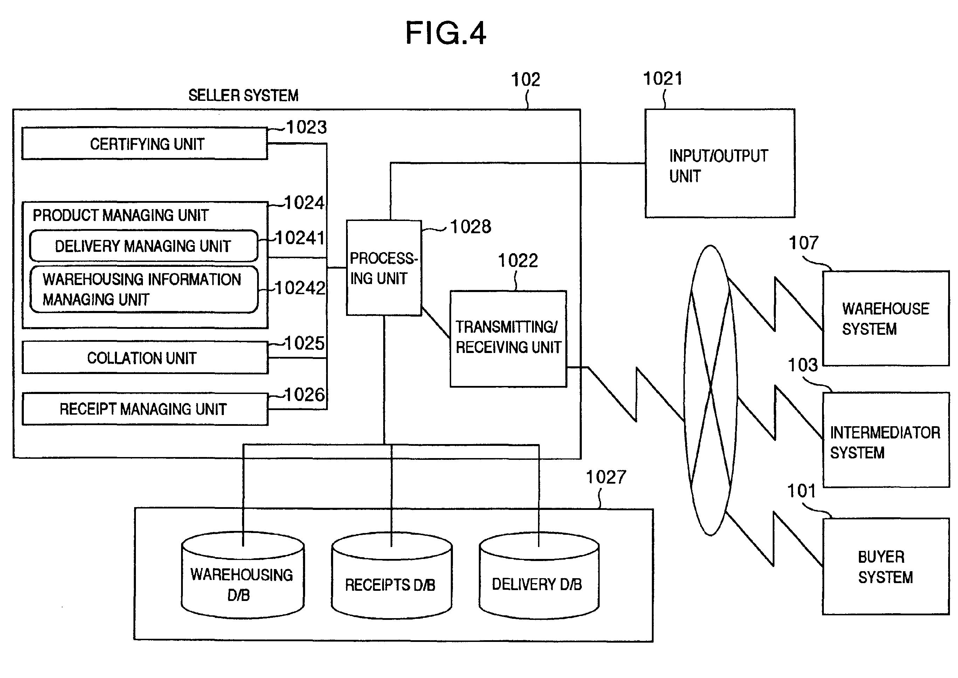

Fig. 4 shows a functional block diagram of the configuration of the seller system 102. The seller system 102 is comprised of an input/output unit 1021 for accepting inputs and outputs to and from its system manager or the like; a transmitting/receiving unit 1022 for effecting through, for example, the communication network transmission and reception of information with respect to the buyer system 101, the intermediator system 103, and the warehouse system 107; a certifying unit 1023 for providing certification for the respective systems (101, 103, and 107); a product managing unit 1024 for managing information concerning the delivery of the products to the warehouse; and a processing unit 1028 for the overall system. The product managing unit 1024 has a delivery managing unit 10241 for managing delivery information concerning the products dispatched to the warehouse from the seller 12 and a warehousing information managing unit 10242 for managing warehousing information transmitted by the warehouse system 107 at the time of the warehousing of the products. After the delivery information and the warehousing information are collated and matched by a collation unit 1025, a receipt managing unit 1026 calculates an amount billed. Further, this seller system 102 has a seller database 1027 including databases for respectively managing information concerning the products delivered to and warehoused in the warehouse, and information concerning the value paid for the warehousing of the products.

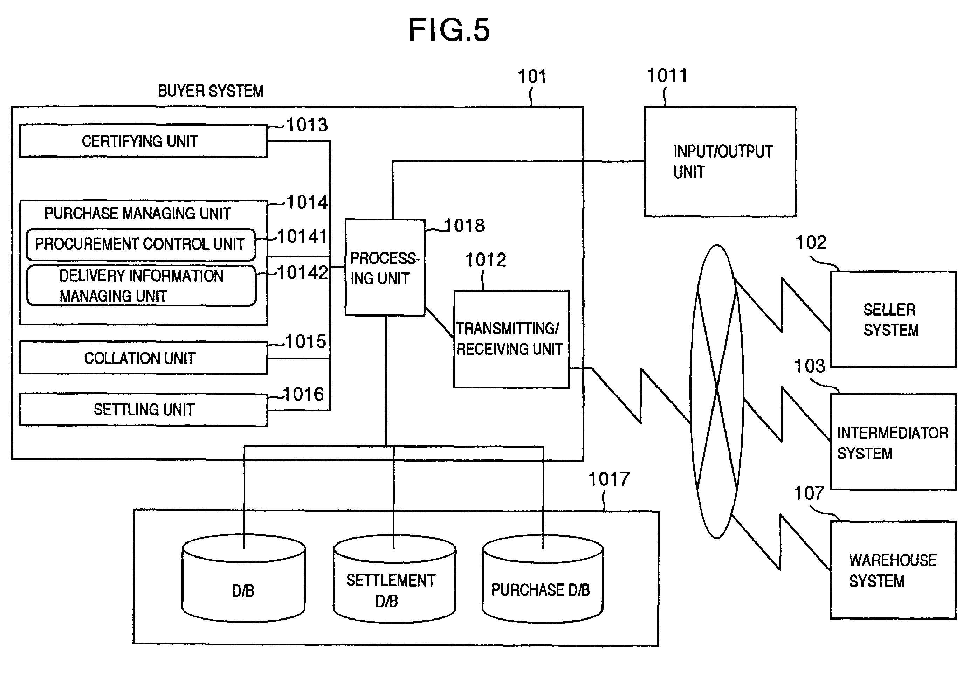

Fig. 5 shows a functional block diagram of the configuration of the buyer system 101. The buyer system 101 is comprised of an input/output unit 1011 for accepting inputs and outputs to and from its system manager or the like; a transmitting/receiving unit 1012 for effecting transmission and reception of information with respect to the seller system 102, the intermediator system 103, and the warehouse system 107; a certifying unit 1013 for providing certification for the respective systems; a purchase managing unit 1014 for managing information concerning the delivery of the products from the warehouse; and a processing unit 1018 for the overall system. The purchase managing unit 1014 has a procurement control unit 10141 for managing purchase information concerning the products delivered from the warehouse by the buyer and a delivery information managing unit 10142 for managing delivery information transmitted by the warehouse system 107 at the time of the delivery of the products. After the purchase information and the delivery information are collated and matched by a collation unit 1015, a settling unit 1016 calculates an amount billed. Further, this buyer system 101 has a buyer database 1017 for managing information concerning the products delivered and purchased from the warehouse and information concerning the value paid for the delivery of the products at the time of the delivery of the products, respectively.

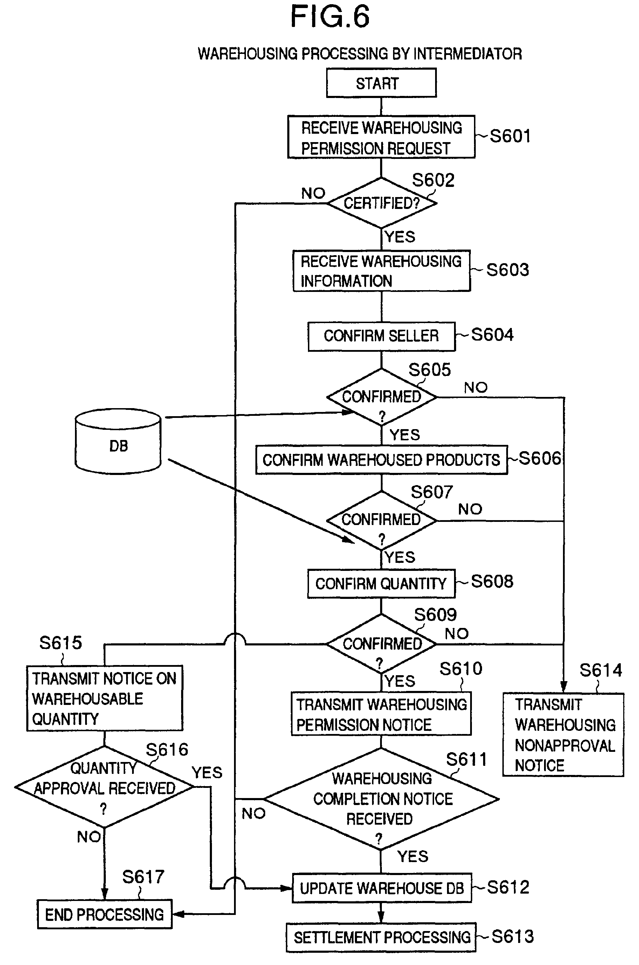

Fig. 6 shows a flowchart of warehousing processing by the intermediator system 103. The intermediator system 103 receives warehousing permission request information transmitted from the warehouse at the time of the warehousing of the products from the warehouse system 107 (S601), and certifies whether the warehousing permission request information is authentic or not (S602). At this time, the warehousing permission request information includes a certification key for certifying the warehouse system 107 as well as a certification key for certifying the warehousing seller 12. In a case where both or one of these items cannot be certified, warehousing is rejected, and the processing ends. It should be noted that, as the certifying method in this case, a digital signature may be used, or a mere password or an electronic stamp may be used. Although it has been described that the intermediator system provides certification on each warehousing at the time of the warehousing of the products by the seller 12, this certification is not necessarily required. Namely, as another alternative method, warehousing information which will be described below may be merely accepted as being authentic. In that case, steps S601 and S602 are unnecessary. Further, as for the above-described alternative methods, the same also applies to the flow of processing by the intermediator 13 involved in the delivery upon request from the buyer 11.

When the certification is given in the aforementioned step S602, the intermediator system 103 accepts the warehousing information (S603). This warehousing information includes the name and identification code of the products to be warehoused, the quantity of products to be warehoused, and the name and identification code of the seller 12 for whom warehousing is made. Following the step S603, with respect to the warehousing for which a permission request has been received, the buyer system gives approval after consecutively confirming the seller 12 (S604, S605), the products to be carried in by the seller 12 (S606, S607), and the quantity of products to be warehoused (S608, S609). If approval cannot be obtained with respect to the first two items, i.e., if matching cannot be obtained between, on the one hand, information concerning the transaction products to be stored in the product DB and the seller 12 delivering the products and, on the other hand, the names of the products and the seller 12 included in the aforementioned warehousing information, the intermediator system 103 transmits a warehousing nonapproval notice (S614), and the processing ends (S617). In addition, as for the confirmation of the quantity of products to be warehoused, the buyer makes a determination as to whether or not warehousing is possible with respect to a predetermined limit in the quantity of products warehoused (S608, S609), and if there is no leeway for warehousing, a warehousing nonapproval notice is transmitted in the same way as with the first two items, and the processing ends (S614, S617). However, if the above-described approval cannot be made, it is possible for the intermediator to adopt a measure of not making payment to the seller 12.

Meanwhile, in a case where although there is leeway for warehousing, not all products can be accepted, the buyer transmits a quantity designation (S615), and if a quantity approval is transmitted from the warehouse system 107, and the warehouse DB is updated on the assumption that only the quantity designated by the quantity designation notice has been warehoused.

If the aforementioned confirmations are made, the intermediator system 103 transmits a warehousing permission notice to the seller system 102 (S610), receives a warehousing completion notice transmitted from the warehouse system 107 with respect to the warehousing permission notice, and effects settlement processing (S613) after updating the warehouse DB (S612). It should be noted that although, in the above case, it has been described that the details of warehousing by the seller 12 are confirmed by the intermediator system 103, the confirmation may be alternatively made by the warehouse system 107 in the same way as the above-described certification, and the intermediator system 103 may regard the information transmitted from the warehouse system 107 as being authentic. In addition, as for this alternative method, the same also applies to the processing flow of the intermediator system 103 involved in the delivery upon request from the buyer 11.

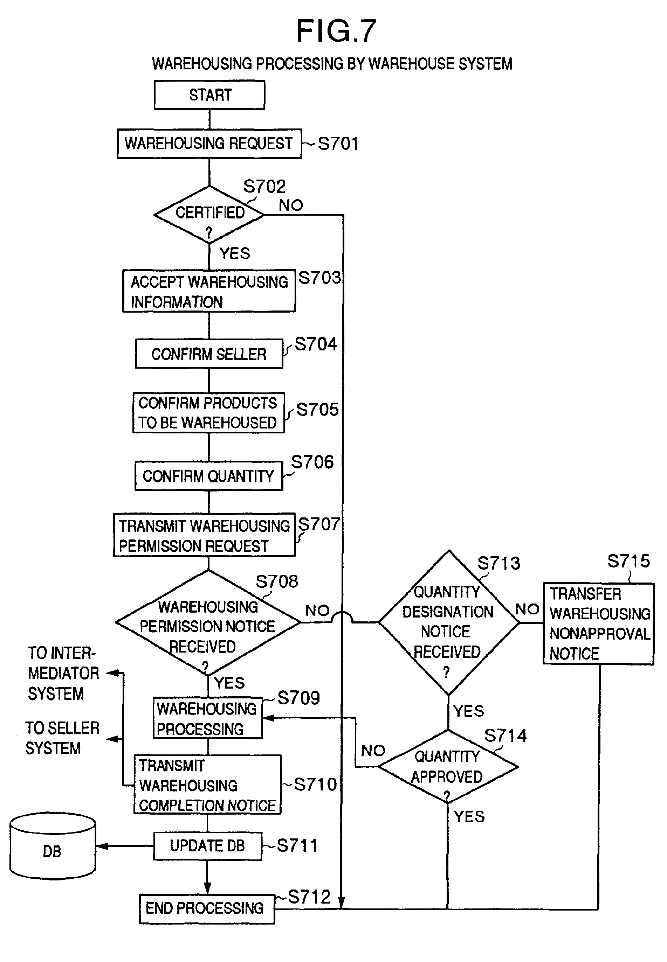

Fig. 7 shows a flowchart of warehousing processing by the warehouse system 107. The warehouse system 107 receives a request for the warehousing of the products from the seller 12 (S701), certifies the seller 12 (S702), and accepts warehousing information (S703). Subsequently, the warehouse system 107 generates warehousing permission request information on the basis of the accepted warehousing information, and transmits it to the intermediator system 103 (S704 to S707), and proceeds with processing on the basis of a notice transmitted from the intermediator system 103 with respect to this warehousing permission request information. Namely, when a warehousing permission notice is received, warehousing processing is carried out with respect to the products (S709), and after a warehousing completion notice is transmitted to the intermediator system 103 and the seller system 102 (S710), the warehouse DB is updated (S711), and the processing ends (S712). In addition, when a quantity designation notice has been received (S713), the seller is requested to make a determination as to whether or not only that quantity of products is to be warehoused, and if it is to be warehoused (714), the quantity approval is transmitted, and warehousing processing is carried out with respect to the designated quantity of products (S709).

When a warehousing nonapproval notice has been received (S715), the warehouse system 107 transmits it to the seller system, and the processing ends (S712).

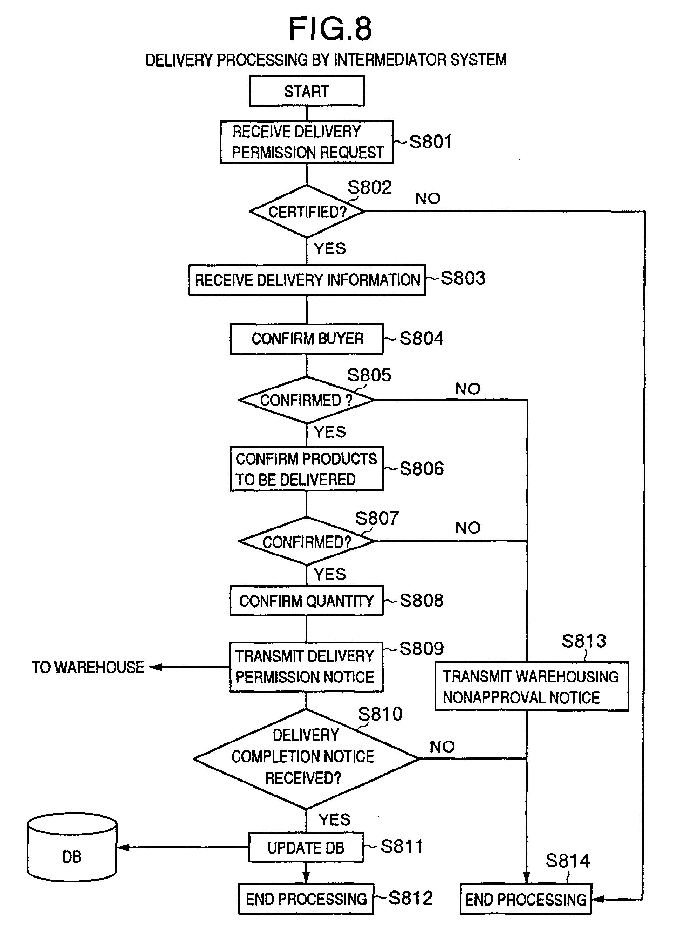

Fig. 8 shows a flowchart of delivery processing by the intermediator system 103. The intermediator system 103 receives delivery permission request information transmitted at the time of the delivery of the products from the warehouse system 107 (S801), and certifies whether the delivery permission request information is authentic or not (S802). At this time, the delivery permission request information includes a certification key for certifying the warehouse system 107 as well as a certification key for certifying the buyer for whom delivery is made. In a case where both or one of these items cannot be certified, delivery is rejected, and the processing ends. It should be noted that, as the certifying method in this case, a digital signature may be used, or a mere password or an electronic stamp may be used.

When the certification is given in the aforementioned step S802, the intermediator system 103 accepts the delivery information (S803). This delivery information includes the name and identification code of the products to be delivered, the quantity of products to be delivered, and the name and identification code of the buyer 11 to be delivered to. Following the step S803, with respect to the delivery for which a permission request has been received, the intermediator system 103 gives approval after consecutively confirming the buyer 11 (S804, S805), the products (S806, S807), and the quantity of products to be delivered (S808). If approval cannot be obtained with respect to the first two items, i.e., if matching cannot be obtained between, on the one hand, information concerning the transaction products to be stored in the product DB and the buyer delivering the products and, on the other hand, the names of the products and the buyer 11 included in the aforementioned delivery information, the intermediator system 103 transmits a delivery nonapproval notice (S813), and the processing ends (S814).

Meanwhile, if the aforementioned confirmations are made, the intermediator system 103 transmits a delivery permission notice to the warehouse (S809), receives a delivery completion notice transmitted from the warehouse system 107 with respect to the delivery permission notice, and effects billing processing (S812) after updating the warehouse DB 1038 (S811).

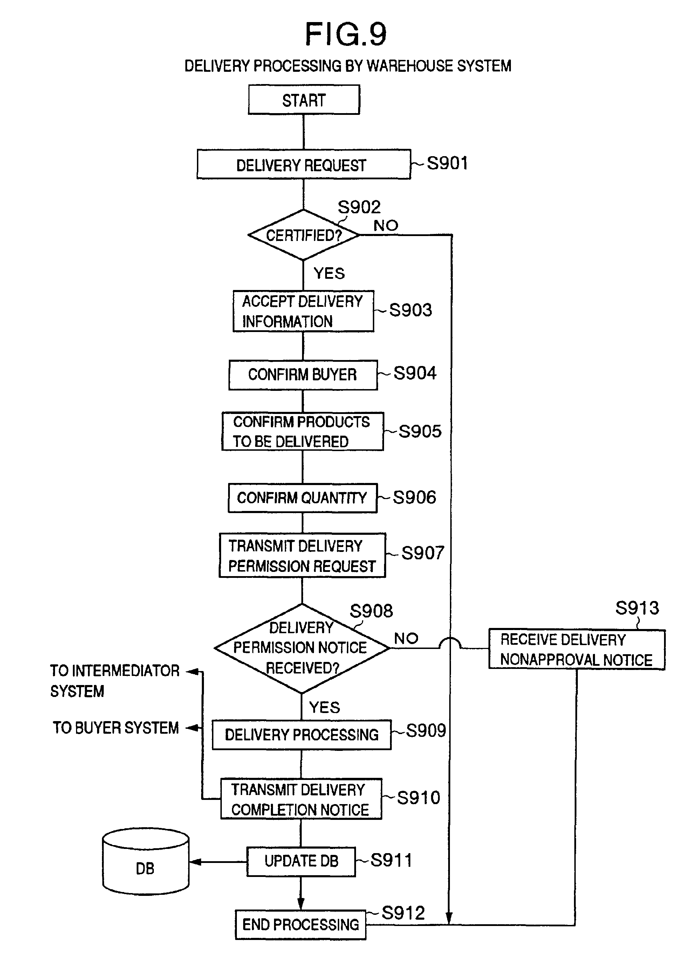

Fig. 9 shows a flowchart of delivery processing by the warehouse system 107. The warehouse system 107 receives a request for the delivery of the products from the buyer 11 (S901), certifies the buyer 11 (S902), and accepts delivery information (S903). Subsequently, the warehouse system 107 generates delivery permission request information on the basis of the accepted delivery information, and transmits it to the intermediator system 103 (S904 to S907), and proceeds with processing on the basis of a notice transmitted from the intermediator system 103 with respect to this delivery permission request information. Namely, when a delivery permission notice is received, delivery processing is carried out with respect to the products (S909), and after a delivery completion notice is transmitted to the intermediator system 103 and the buyer system 101 (S910), the warehouse DB is updated (S911), and the processing ends (S912). In addition, when a delivery permission is not obtained (when a delivery nonapproval notice is received) (S913), the buyer is notified to that effect, and the processing ends (S912).

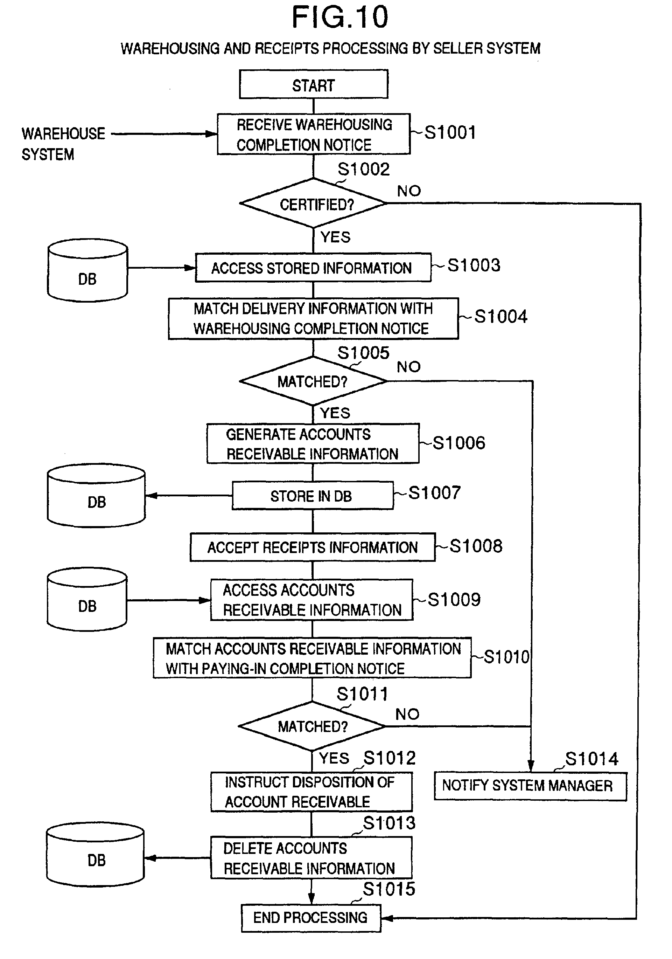

Fig. 10 shows a flowchart illustrating the flow of the seller system 102 for processing payment from the intermediator 13 to the seller system 102 with respect to the warehoused products. The seller system 102 receives the warehousing completion notice, which has been described with reference to Fig. 7, from the warehouse system 107 (S1001), and certifies that the warehousing completion notice is authentic (S1002). If the warehousing completion notice cannot be certified, the processing ends (S1015), and if it can be certified, the processing proceeds to an ensuing step. Next, delivery information stored by the seller system 102 at the time of shipment of the products to the warehouse is accessed (S1003), and the delivery information and the warehousing completion notice are collated and matched (S1004). At this time, the delivery information includes an identifier for identifying the shipped products, the quantity of products shipped, and the data of shipment.

If the two pieces of information match in the collation, the operation proceeds to an ensuing step, and if they do not match, a display or a notice is given to the system manager to that effect (S1014), and the processing ends (S1015). If matching can be obtained in step S1005, the seller system 102 generates accounts receivable information (S1006), and stores it in the DB 1027 (S1007).

When the intermediator system 103 similarly receives the warehousing completion notice from the warehouse system 107 and makes payment to the seller 12 on the basis of it, the seller system 102 accepts the notification to the effect that the payment has been made (S1008). At this time, money received or receipt of money information, may be provided by a bank or the like with which the seller 12 having the seller system 102 has an account, or may be inputted by the system manage on the basis of a notification from the bank or the like. The seller system 102 accesses the aforementioned accounts receivable information (S1009), collates it with the money received information, or receipt of money and determines whether they match (S1010, S1011). If they do not match, a display or a notification to that effect, including the amount of excess and deficiency, is given to the system manager (S1014). If they match, an instruction is given for disposition of the account receivable (S1012), the account receivable information is deleted (S1013), and the processing ends (S1015).

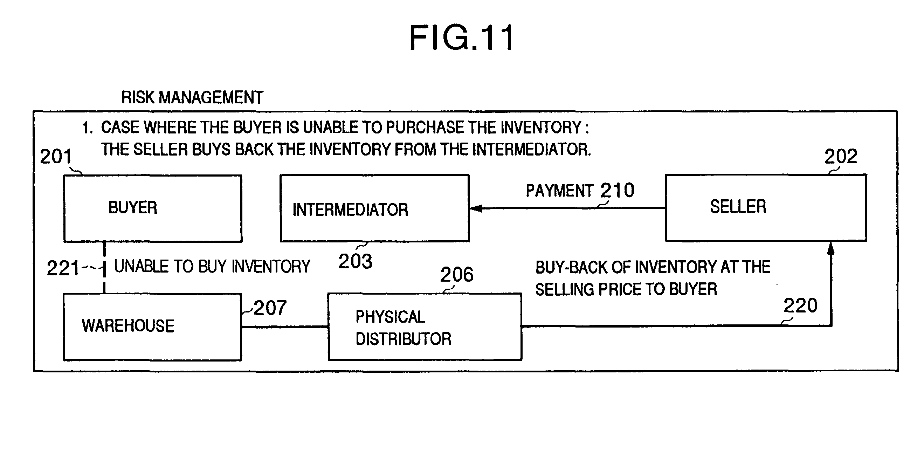

Figs. 11 to 14 are diagrams explaining a risk avoiding measure which is adopted by the intermediator to avoid loss incurred by the intermediator in the transaction scheme of the invention in a case where the buyer has gone bankrupt or an event similar to it has occurred.

Fig. 11 shows a method for avoiding the loss of the intermediator 13 in a case where the buyer 11 has failed to purchase the inventory products stored in the warehouse 17. At normal times, the buyer 11 has the products delivered from the warehouse 17, but when the buyer 11 lapses into a situation in which it is unable to purchase the inventory due to its bankruptcy or other reason, the intermediator 13 is bound to hold a stagnant inventory. Since the intermediator 13 is a company whose purpose is to provide funds to the sellers 12, and it is not assumed that the intermediator 13 itself engages in sales activities, it is virtually impossible to sell this inventory to other companies. To avoid this loss, the intermediator 13 concludes in advance an inventory buy-back contract with a condition precedent or other contract with the seller 12. As a result of this contract, the inventory products held by the intermediator 13 due to the occurrence of a predetermined event are sold from the intermediator 13 to the seller 12. Incidentally, as a general rule, the disposal price in this case is the price of purchase by the buyer 11, but may not necessary be such a price.

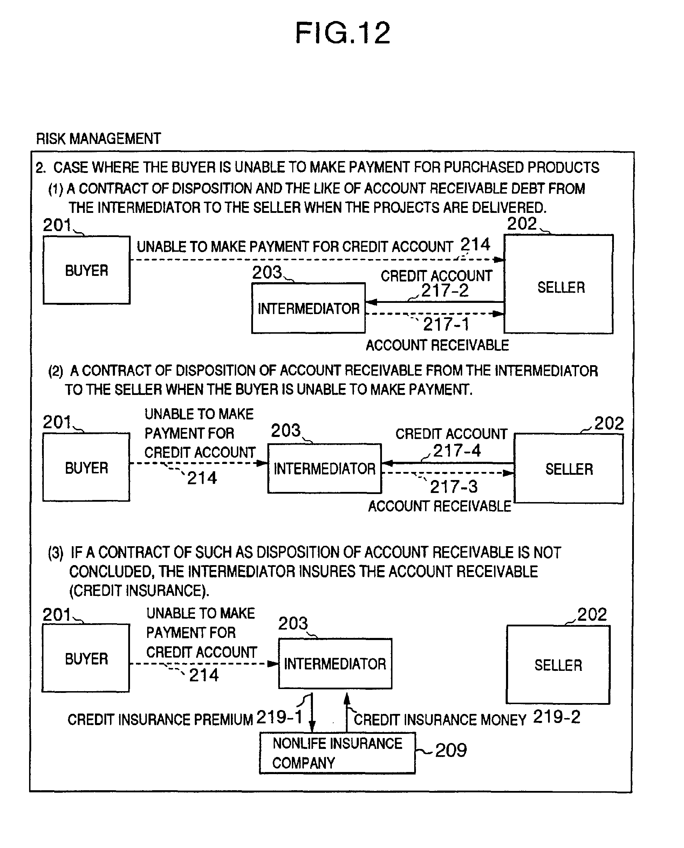

Fig. 12 illustrates three methods for avoiding the risk at the time when it has become difficult for the intermediator 13 to receive the value due to the bankruptcy or the like of the buyer 11 in a case where the intermediator 13 has not received the price for the products delivered by the buyer 11. Namely, (1) in a first method, the intermediator 13 sells an account receivable debt to the seller 12 (217-1) at the point of time when the products are delivered from the warehouse 17. Since the debt and credit of the account receivable have been transferred to that of the relationship between the seller 12 and the buyer 11, the intermediator 13 receives the sale value of the debt from the seller 12 at this point of time of delivery (217-2). (2) In a second method, a contract is concluded in advance whereby the relevant account receivable (bad debt) is sold to the seller 12 (218-3) at the point of time when it is determined that the intermediator 13 is unable to collect the account receivable (214), and the value is received from the seller 12 by using this contract. (3) A third method concerns a case where an account receivable disposition contract in (1) or (2) is not concluded. A credit insurance contract is concluded in advance with an arbitrary nonlife insurance company, and an insurance premium is paid (219-1). The insurance premium 219-2 is received at the point of time when it is determined that the buyer 11 is unable to pay the account receivable.

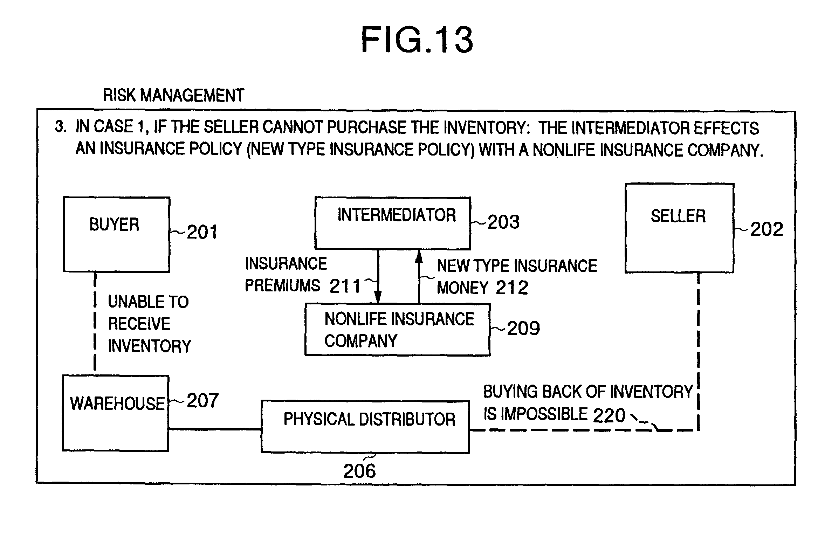

Fig. 13 shows a countermeasure against a case where the seller 12 is unable to fulfill an inventory buy-back contract or a contract of reservation of proprietary right (221) due to its bankruptcy or the like. Namely, the intermediator 13 concludes in advance an insurance contract with an arbitrary nonlife insurance company, and pays insurance premiums (211), and thereby receives insurance money 212 when it is determined that the contract for inventory buy-back or the like cannot be fulfilled (220).

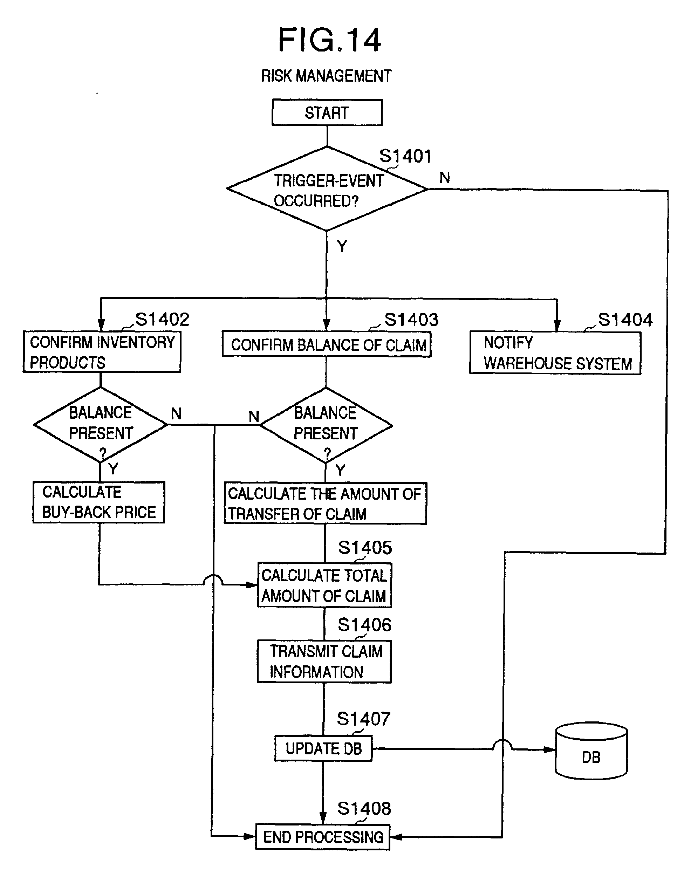

Fig. 14 shows a flowchart of processing flow at the time when the intermediator system 103 executes the risk avoiding measure explained with reference to Figs. 11-13. In the event that the buyer 11 has lapsed into a bankruptcy or a similar situation, the intermediator 13 recognizes it as a trigger-event concerning the triggering a risk avoiding measure. Here, the situation similar to a bankruptcy may include not only the bankruptcy petition filing for protection under the bankruptcy law, but also non-payment of a draft drawn by the buyer, and the forcible execution, attachment, ancillary attachment, or the like with respect to the buyer 11. Further, the recognition of the trigger-event may be based on information provided by a third-party organization which provides credit information concerning corporations and the like, or may be based on input by a person who recognized the trigger-event, such as the system manager.

Upon recognizing the trigger-event, the intermediator system 103 checks through the database connected to itself the presence or absence of inventory products being stored and managed in the warehouse 17 on the assumption that they are to be delivered to the buyer 11 in which the trigger-event occurred, and if the inventory products are present, the intermediator system 103 specifies them, grasps their quantity, and calculates their value (S1402). In addition, the intermediator system 103 grasps the amount to be claimed to the buyer 11 who has not settled the account with respect to the already delivered products (S1403), and transmits an instruction to the warehouse system 107 to the effect that the delivery due to the buyer 11 will be frozen (S1404). Subsequently, the intermediator system 103 adds the values calculated in the aforementioned steps S1402 and S1403, generates claim information, and transmits it to the seller system 102 of the seller 12 who warehoused the aforementioned inventory products. Then, the contents of the intermediator database are updated on the basis of the foregoing processing (S1407), and the processing ends (S1408).

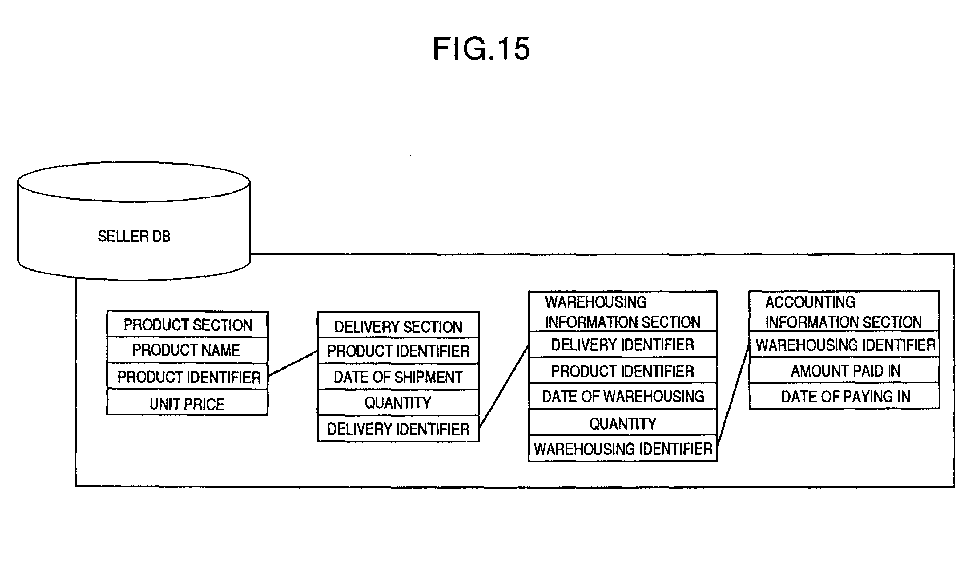

Fig. 15 shows the configuration of the database of the seller system 102. The database of the seller system 102 includes a product section, a delivery section, a warehousing information section, and an accounting information section. Stored in the product section is information concerning the name of products which are sold by the seller 12 to the intermediator 13, an identifier for identifying the products, and the unit price per unit of each product. Stored in the delivery section are the product identifier, the date of shipment, the quantity, and an identifier provided for each shipment in a case where the seller 12 carried predetermined products into the warehouse 17. Next, stored in the warehousing information section is warehousing information which is generated on the basis of the warehousing completion notice sent from the warehouse in correspondence with the shipment. The warehousing information includes a delivery identifier indicating to which shipment the warehousing corresponds, the product identifier, the date of warehousing, the quantity, and an identifier provided for each warehousing.

Further, the amount to be paid by the intermediator 13 on each warehousing, which is calculated from each item of the aforementioned information, as well as the date of its payment, is stored in the accounting information section.

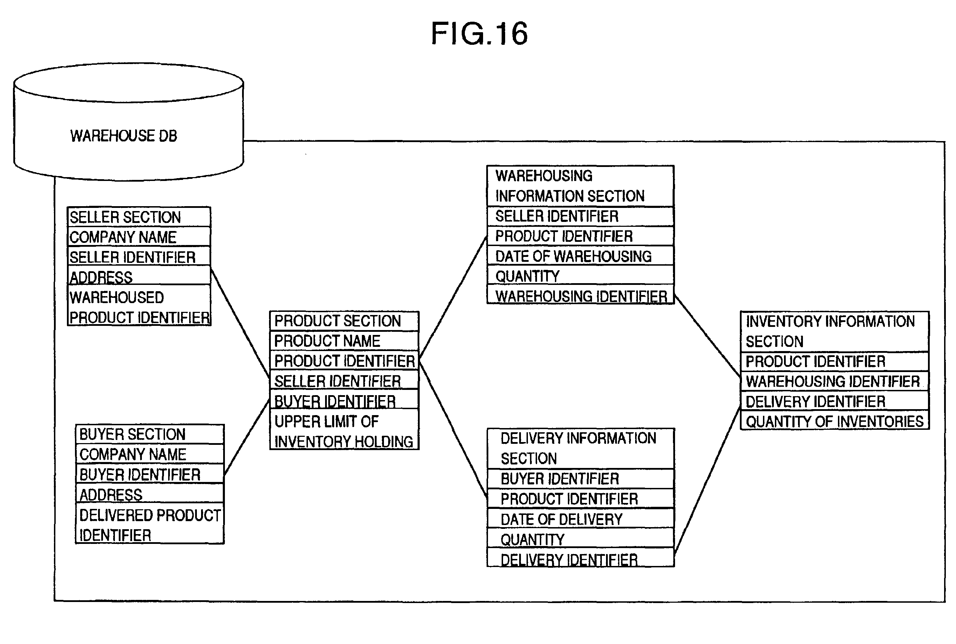

Fig. 16 shows the configuration of the database of the warehouse system 107. The warehouse system 107 includes a seller section, a buyer section, a product section, a warehousing managing section, a delivery managing section, and an inventory managing section. Stored in the seller section and the buyer section are information concerning the sellers 12 and the buyer 11 (e.g., names of companies, identifiers for identifying the companies, addresses, identifiers of the products subject to transaction). Warehousing by the seller 12 and delivery by the buyer 11 are respectively managed by the warehousing managing section and the delivery managing section. Further, stored in the inventory information section are the product identifier and the inventory quantity with respect to the inventory in the warehouse at each point of time on the basis of the warehousing information and the delivery information.

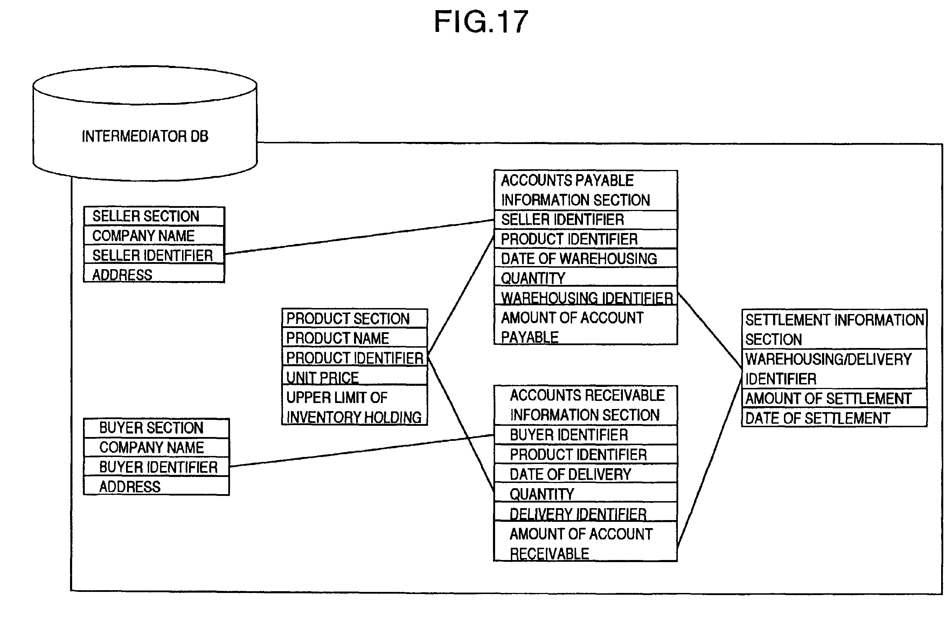

Fig. 17 shows the configuration of the database of the intermediator system 103. The intermediator system 103 includes a seller section, a buyer section, a product section, an accounts payable information section, an accounts receivable information section, and a settlement information section. Information concerning the company carrying the products into the warehouse 17 and the company delivering the products from the warehouse 17 is respectively stored in the seller section and the buyer section, while information concerning the products which are carried into or out of the warehouse is stored in the product section. Stored in the product section is information concerning the name of the products, the identifier provided for each product and its unit price, and an upper limit of the acceptable quantity of the products. Further, the amount of the account payable is stored in the accounts payable section with respect to the products carried into the warehouse by the seller 12, and is managed on each warehousing by the settlement information section. In the accounts receivable information section, the amount of the account receivable is stored with respect to the products delivered from the warehouse by the buyer 11, and is similarly managed on each delivery by the settlement information section.

In accordance with the present invention, at the point of time when the products are shipped, particularly at the point of time when the products are warehoused in a storage with which the intermediator is capable of being involved, the seller able to collect the trade account receivable, so that the seller is able to improve the financing efficiency and reduce bank borrowings. At the same time, since the account receivable is instantly turned into the receipt of money, it is possible to compress the balance sheet (B/S). In addition, the seller is able to transact sales without intermediation by an intermediator such as a trader or the like by cooperating with a physical distributor in third party logistics and the like, and is able to benefit from the advantage of reduced selling expenditure through the promotion of electronic commerce. In another form, if a physical distributor including a storage is provided with the function of the intermediator in accordance with the present invention, the outsourcing of finance at an inventory stage in a commercial transaction system such as the JIT scheme or the like can be effected rationally and efficiently.

## Claims

1. An intermediating apparatus connected to a storage management system, for financially intermediating the transaction of products between a seller and a buyer, comprising:
transaction managing means for managing the transaction by relating the seller, the buyer, and the products carried into the storage by the seller under the condition that the products will be purchased by the buyer, to correspond each other;
settling means for paying to the seller a buying price of the products which is calculated on the basis of warehousing information transmitted from said storage management system in response to the delivery of the products from the seller to the storage; and
invoicing means for invoicing to the buyer concerning a selling price of the products which is calculated on the basis of delivery information transmitted from said storage management system in response to the delivery of the products from the storage.

2. The intermediating apparatus according to claim 1, further comprising:
risk transferring means for claiming the payment of a predetermined amount to the seller in response to agreement between an input event and a predetermined condition which is set as indicating the deterioration of credit of the buyer, and for instructing the product storage to freeze the delivery of the products by the buyer.

3. The intermediating apparatus according to claim 1, further comprising:
first storage means for storing information on a predetermined condition which is set as indicating the deterioration of credit of the buyer;
accepting means for accepting information indicating the occurrence of a risk satisfying the condition; and
risk transferring means for claiming the payment of a predetermined amount to the seller in response to the acceptance of the risk occurrence information, and for instructing the product storage to freeze the delivery of the products by the buyer.

4. The intermediating apparatus according to claim 3, wherein the warehousing information includes an identifier for identifying the products carried in, a quantity of the products carried in, and an identifier for identifying the seller who carried in the products, while the delivery information includes an identifier for identifying the products carried out, a quantity of the products carried out, and an identifier for identifying the buyer who carried out the products.

5. The intermediating apparatus according to claim 4, further comprising:
second storage means for storing the product information including the identifier for identifying the products carried into the storage by the seller on the assumption that the products will be purchased by the buyer, and unit information indicating a unit price per unit of the product, in a mutually corresponding manner,
wherein said settling means pays the buying price of the products to the seller on the basis of the product information, the unit price information, and the warehousing information stored in said second storage means.

6. The intermediating apparatus according to claim 5, wherein said settling means effects payment by subtracting or adding a commission calculated in accordance with a predetermined method from or to the buying price.

7. A method of intermediation using an intermediating apparatus concerning the transaction of products, said intermediating apparatus being connected via a communication line to a storage apparatus installed for each of a seller and a buyer of the products in a predetermined storage for storing the products, comprising the steps of:
causing the buyer, the seller, and the products carried into the storage by the seller and virtually anticipated to be purchased by the buyer to correspond to each other in accordance with a preset relationship of correspondence;
calculating a buying price of the carried-in products on the basis of warehousing information transmitted from said storage apparatus in response to the carrying of the products into the storage by the seller, and paying the buying price of the carried-in products to the seller; and
calculating a selling price of the carried-out products on the basis of delivery information transmitted from said storage apparatus in response to the carrying out of the products from the storage by the buyer, and claiming the selling price of the carried-out products to the buyer.

8. The method of intermediation according to claim 7, wherein, in the step of causing the seller, the buyer, and the products to correspond to each other, when there is a discrepancy in the products to be carried in from the preset relationship of correspondence, the payment to the seller is prohibited.

9. The method of intermediation according to claim 7, wherein the step of payment includes a step of searching a method of payment which is set and stored for each seller by said intermediating apparatus, and a step of paying the buying price of the products carried into the storage in accordance with the predetermined method of payment for each seller recognized in the search of the method of payment.

10. The method of intermediation according to claim 7, further comprising:
storing a predetermined condition which is set as indicating the deterioration of credit of the buyer;
accepting information indicating the occurrence of a risk satisfying the condition; and
claiming the payment of a predetermined amount to the seller in response to the acceptance of the information on the occurrence of the risk, and instructing the product storage to freeze the carrying out of the products by the buyer,
whereby a risk borne by an entity who conducts the resale of the products between the buyer and the seller is transferred.

11. In an intermediating apparatus for financially intermediating the transaction of products, said intermediating apparatus being connected via a communication line to a storage apparatus installed for each of a seller and a buyer of the products in a predetermined storage for storing the products, a computer readable program for implementing the intermediation by using a computer, said program executing the steps of:
causing the buyer, the seller, and the products carried into the storage by the seller and virtually anticipated to be purchased by the buyer to correspond to each other in accordance with a preset relationship of correspondence;
calculating a buying price of the carried-in products on the basis of warehousing information transmitted from said storage apparatus in response to the carrying of the products into the storage by the seller, and paying the buying price of the carried-in products to the seller; and
calculating a selling price of the carried-out products on the basis of delivery information transmitted from said storage apparatus in response to the carrying out of the products from the storage by the buyer, and claiming the selling price of the carried-out products to the buyer.

12. An inventory financing system (e.g., Fig. 2) for financially intermediating the transaction of products and connected via a communication line to a managing apparatus of a storage interposed between a seller and a buyer of products, comprising:
transaction managing means (1035, 1037) for causing the buyer, the seller, and the products carried into the storage by the seller on the assumption that the products will be purchased by the buyer to correspond to each other in accordance with a preset relationship of correspondence;
settling means (10361, 1037) for matching warehousing information transmitted from said storage managing apparatus by said transaction managing means in response to the carrying of the products into the storage by the seller, calculating a buying price of the carried-in products on the basis of a result of the matching, and executing the payment of the calculated buying price to the seller; and
claiming means (10362, 1037) for matching delivery information transmitted from by said storage managing apparatus by said transaction managing apparatus in response to the carrying out of the products from the storage by the buyer, calculating a selling price of the carried-out products on the basis of a result of the matching, and claiming the calculated selling price of the carried-out products to the buyer.

13. The system according to claim 12, wherein said settling means includes processing means for allowing the seller to generate a claim on the carried-in products at a site of said financing system in response to the payment of the calculated buying price.

14. The system according to claim 12, wherein said claiming means includes processing means for setting an account receivable in response to the claim of the selling price of the carried-out products.

15. The system according to claim 12, further comprising:
risk protecting means for monitoring the degree of credit of the buyer, claiming the payment of a price corresponding to the payment of the selling price to the seller in response to matching between a result of the monitoring and a predetermined risk condition, and instructing said storage managing apparatus to freeze the carrying out of the products by the buyer.

16. A method of financially mediating the transaction of products in a commercial transaction network in which a seller and a buyer of products, and a managing apparatus of a storage and an inventory finance intermediating system interposed therebetween are connected via a communication line, comprises the following steps executed by said inventory finance intermediating system:
managing the transaction by causing the buyer, the seller, and the products carried into the storage by the seller on the assumption that the products will be purchased by the buyer to correspond to each other in accordance with a preset relationship of correspondence;
matching warehousing information transmitted from said storage managing apparatus in said transaction managing step in response to the carrying of the products into the storage by the seller, calculating a buying price of the carried-in products on the basis of a result of the matching, and executing the payment of the calculated buying price to the seller; and
matching delivery information transmitted from by said storage managing apparatus in the transaction managing step in response to the carrying out of the products from the storage by the buyer, calculating a selling price of the carried-out products on the basis of a result of the matching, and claiming the calculated selling price of the carried-out products to the buyer.

17. The method according to claim 16, wherein said inventory finance intermediating system is configured at a site of said storage managing apparatus.

18. The method according to claim 16, wherein said inventory finance intermediating system activates a finance intermediating function for each seller during a period when the carried-in products are in stock in the storage.
